(19) Europäisches Patentamt
European Patent Office
Office européen des brevets

(11) **EP 3 716 103 A2**

(12) **EUROPEAN PATENT APPLICATION**

(43) Date of publication:
**30.09.2020 Bulletin 2020/40**

(51) Int Cl.:
*G06F 17/16* (2006.01)   *G05D 1/02* (2020.01)

(21) Application number: **20162788.2**

(22) Date of filing: **12.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 CN 201910248609**

(71) Applicant: **Ricoh Company, Ltd.**
**Tokyo 143-8555 (JP)**

(72) Inventors:
• **CAO, Ting**
**Beijing, 100044 (CN)**
• **LIU, Dianchao**
**Beijing, 100044 (CN)**
• **WANG, Xiaoxia**
**Beijing, 100044 (CN)**
• **WANG, Gang**
**Beijing, 100044 (CN)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(54) **METHOD AND APPARATUS FOR DETERMINING TRANSFORMATION MATRIX, AND NON-TRANSITORY COMPUTER-READABLE RECORDING MEDIUM**

(57) A method and an apparatus for determining a transformation matrix, and a non-transitory computer-readable recording medium are disclosed. The method includes continuously obtaining frames of first type data at a first frequency and continuously obtaining frames of second type data at a second frequency; determining a transformation matrix between two adjacent frames of the first type data, and transformation matrices between one frame of the second type data and the two adjacent frames of the first type data, the one frame of the second type data being obtained at a moment whose sum of distances from respective moments for obtaining the first type data is minimum; and fusing the determined transformation matrices based on a predetermined fusion strategy, and determining the fused transformation matrix as a final transformation matrix between the two adjacent frames of the first type data.

FIG.1

EP 3 716 103 A2

**Description**

BACKGROUND OF THE INVENTION

**1. Field of the Invention**

The present disclosure generally relates to the field of simultaneous localization and mapping (SLAM), and specifically, relates to a method and an apparatus for determining a transformation matrix, and a non-transitory computer-readable recording medium in SLAM.

**2. Description of the Related Art**

SLAM is a concept in which it is hoped that a robot starts from an unknown place in an unknown environment while simultaneously localizing a position-pose itself by repeatedly observing map features (such as corners, pillars or the like) during the movement, and then incrementally constructs a map based on its own position, thereby achieving the purpose of SLAM.

In the prior art, common SLAM technologies include lidar-based laser positioning (LiDAR SLAM) and camera-based visual positioning (VSLAM). Both LiDAR SLAM and VSLAM have their own advantages and limitations. For example, VSLAM can work stably in a dynamic environment rich in texture, but the disadvantages are that it is greatly affected by lighting conditions, the accuracy is reduced in a high dynamic environment, and high complexity of the scene is required. Although LiDAR SLAM can play a greater role in environments with severely insufficient lighting or missing textures, there are deficiencies such as limited detection range of LiDAR and structural requirements for installation.

During the incremental construction of the map, it is very important to calculate transformation matrices among consecutive data frames. Matching is performed by searching for the same feature among consecutive data frames, and transformation matrices among consecutive data frames are calculated based on the consecutive data frames that are successfully matched. Then, the newly obtained data frame can be added to the existing data frame based on the calculated transformation matrices. As described above, in the existing SLAM technologies, due to their respective limitations, there may be cases where a transformation matrix cannot be obtained based on the obtained data.

SUMMARY OF THE INVENTION

In view of the problem of the conventional technology, it is desirable to provide a method, an apparatus and a non-transitory computer-readable recording medium capable of determining a transformation matrix even in a case where matching of adjacent data frames fails.

According to an aspect of the present disclosure, a method for determining a transformation matrix includes continuously obtaining a plurality of frames of first type data at a first frequency and continuously obtaining a plurality of frames of second type data at a second frequency, a time interval between adjacent moments for obtaining the first type data being a first interval corresponding to the first frequency, and a time interval between adjacent moments for obtaining the second type data being a second interval corresponding to the second frequency; determining a transformation matrix between two adjacent frames of the first type data, and transformation matrices between one frame of the second type data corresponding to the two adjacent frames of the first type data and the two adjacent frames of the first type data, the one frame of the second type data corresponding to the two adjacent frames of the first type data being one frame of the second type data that is obtained at a moment whose sum of distances from respective moments for obtaining the two adjacent frames of the first type data is minimum; and fusing, based on a predetermined fusion strategy, the determined transformation matrices, and determining the fused transformation matrix as a final transformation matrix between the two adjacent frames of the first type data.

According to another aspect of the present disclosure, an apparatus for determining a transformation matrix includes a first data collecting unit configured to continuously obtain a plurality of frames of first type data at a first frequency; a second data collecting unit configured to continuously obtain a plurality of frames of second type data at a second frequency; a transformation matrix calculating unit configured to determine a transformation matrix between two adjacent frames of the first type data, and transformation matrices between one frame of the second type data corresponding to the two adjacent frames of the first type data and the two adjacent frames of the first type data, the one frame of the second type data corresponding to the two adjacent frames of the first type data being one frame of the second type data that is obtained at a moment whose sum of distances from respective moments for obtaining the two adjacent frames of the first type data is minimum; and a fusion unit configured to fuse, based on a predetermined fusion strategy, the determined transformation matrices, and determine the fused transformation matrix as a final transformation matrix between the two adjacent frames of the first type data, wherein a time interval between adjacent moments for obtaining the first type data by the first data collecting unit is a first interval corresponding to the first frequency, and a time interval between adjacent moments for obtaining the second type data by the second data collecting unit is a second interval corresponding to the second frequency.

According to another aspect of the present disclosure, a non-transitory computer-readable recording medium having computer-executable instructions for execution by one or more processors is provided. The computer-executable instructions, when executed, cause the one or more processors to carry out the method for determining the transformation matrix according to the aspect of the present disclosure.

In the method and the apparatus for determining the transformation matrix, and the non-transitory computer-readable recording medium according to embodiments of the present disclosure, the transformation matrix calculated based on the same type of data and the transformation matrix calculated based on different types of data are fused, thereby effectively avoiding a problem that a transformation matrix cannot be determined by a single type of data due to the limitations of the use scene. Furthermore, in the process of calculating the transformation matrix based on the different types of data, it is not necessary to align the moments on the different types of data collected by different devices, thereby simplifying the data collection process and avoiding complex synchronization between the devices.

## BRIEF DESCRIPTION OF THE DRAWINGS

FIG. 1 is a flowchart illustrating a transformation matrix determining method according to an embodiment of the present disclosure;

FIG. 2 is a schematic diagram illustrating moments for obtaining frames of first type data and frames of second type data;

FIG. 3 is a schematic diagram illustrating a data flow of the transformation matrix determining method according to the embodiment of the present disclosure;

FIG. 4 is a schematic diagram illustrating a fusion strategy based on a local closed-loop according to the embodiment of the present disclosure;

FIG. 5 is a flowchart illustrating a specific process of removing dynamic targets in a case where data from which the dynamic target is to be removed is point-cloud data;

FIGs. 6A and 6B are schematic diagrams illustrating respective sub-point-clouds obtained after dividing the data before the removal of the dynamic target and data that is obtained at an adjacent moment, respectively;

FIGs. 7A and 7B are schematic diagrams illustrating a first topology map and a second topology map obtained based on respective division results of the point-clouds of FIGs. 6A and 6B, respectively;

FIG. 8 is a schematic diagram illustrating an optimized topology map after removing dynamic targets;

FIG. 9 is a schematic diagram illustrating point-clouds after removing dynamic targets;

FIG. 10 is a block diagram illustrating a functional configuration of a transformation matrix determining apparatus according to another embodiment of the present disclosure;

FIG. 11 is a block diagram illustrating a hardware configuration of a transformation matrix determining apparatus according to another embodiment of the present disclosure; and

FIG. 12 is a schematic diagram illustrating a non-transitory computer-readable recording medium according to another embodiment of the present disclosure.

## DESCRIPTION OF THE EMBODIMENTS

In the following, specific embodiments of the present disclosure will be described in detail with reference to the accompanying drawings, so as to facilitate the understanding of technical problems to be solved by the present disclosure, technical solutions of the present disclosure, and advantages of the present disclosure. The present disclosure is not limited to the specifically disclosed embodiments, and various modifications, combinations and replacements may be made without departing from the scope of the present disclosure.

In order to facilitate the understanding of the present disclosure, the data definitions herein are first described as follows.

First data: one frame of first type data obtained at moment ti
Second data: one frame of the first type data obtained at mement $t_{i+1}$
Third data: one frame of second type data obtained at time t'
First transformation matrix: a transformation matrix from the first data to the second data
Second transformation matrix: a transformation matrix from the first data to the third data
Third transformation matrix: a transformation matrix from the third data to the second data
Fourth transformation matrix: a product of the second transformation matrix and the third transformation matrix

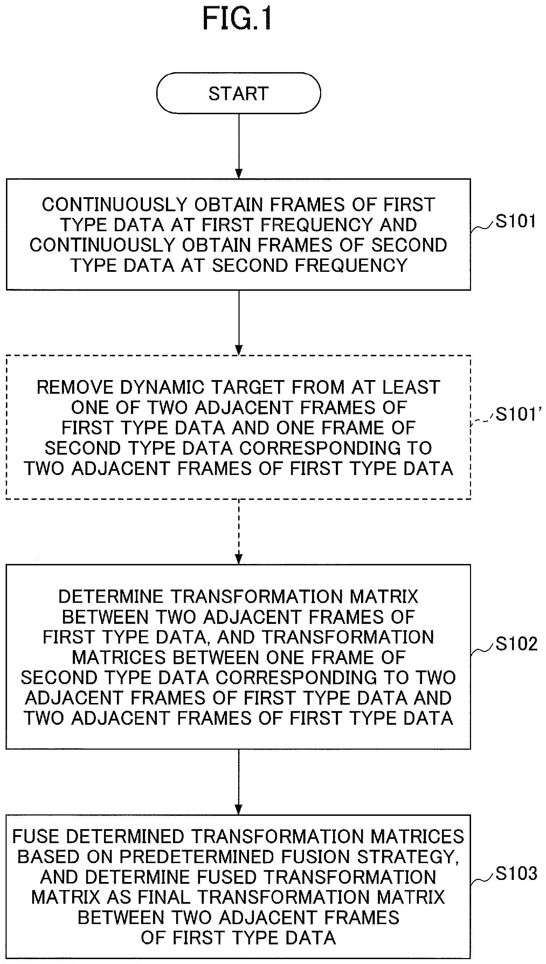

In the following, a transformation matrix determining method will be described with reference to FIG. 1. FIG. 1 is a flowchart illustrating the transformation matrix determining method according to an embodiment of the present disclosure. The transformation matrix determining method may be applied to SLAM, and may realize incremental construction of a map and localization itself during a movement of a robot based on the calculated transformation matrix. As shown in FIG. 1, the transformation matrix determining method includes the following steps.

First, in step S101, a plurality of frames of first type data are continuously obtained at a first frequency, and a plurality of frames of second type data are continuously obtained at a second frequency.

Here, the first type data and the second type data represent different types of data. For example, the first type data may be image data, and a pixel point in the image data represents a grayscale value (black and white image) or R, G and B values (color image) of the point. The second type data may be point-cloud data, and a pixel point in the point-cloud data represents a three-dimensional coordinate value of the point. Note that the first type data may also be point-cloud data, and the second type data may also be image data. The present disclosure is not limited to this. Any other different types of data may be similarly applied to the present disclosure.

The different types of data are obtained by different types of equipment. For example, the image data may be obtained by a camera, and the point-cloud data may be obtained by a lidar. Note that the present disclosure is not limited to this. Any other different type of devices for obtaining different types of data may be similarly applied to the present disclosure.

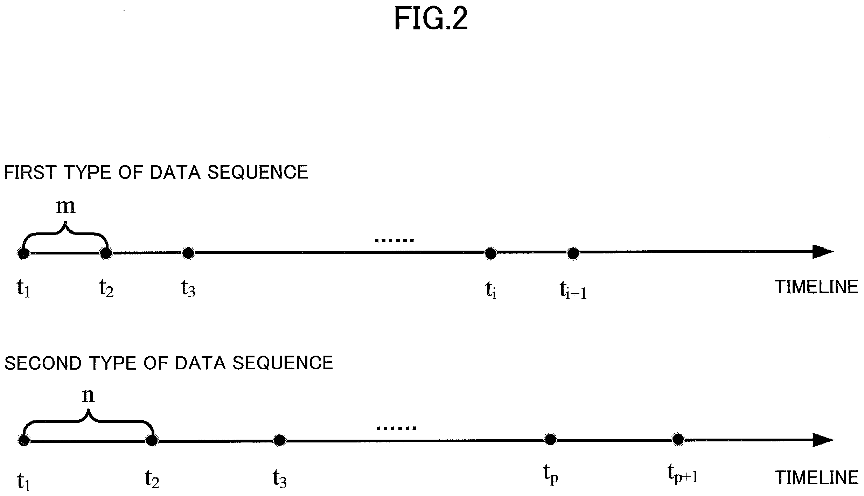

Due to the differences in operating parameters of different devices, the frequency for obtaining the data is usually different. As described above, the plurality of frames of the first type data are continuously obtained at the first frequency, and the plurality of frames of the second type data are continuously obtained at the second frequency. Accordingly, a time interval between adjacent moments for obtaining the first type data is a first interval corresponding to the first frequency, and a time interval between adjacent moments for obtaining the second type data is a second interval corresponding to the second frequency. The first interval and second interval are usually different intervals. FIG. 2 is a schematic diagram illustrating moments for obtaining frames of first type data and frames of second type data. As shown in FIG. 2, the time interval between adjacent moments for obtaining the first type data is interval m corresponding to the first frequency, and the time interval between adjacent moments for obtaining the second type data is interval n corresponding to the second frequency. It can be seen that the moment for obtaining the first type data and the moment for obtaining the second type data are usually misaligned.

Then, referring back to FIG. 1, in step S102, a transformation matrix between two adjacent frames of the first type data, and transformation matrices between one frame of the second type data corresponding to the two adjacent frames of the first type data and the two adjacent frames of the first type data are determined. In other words, in step S102, a transformation matrix between data of the same type and a transformation matrix between data of different types are determined. Here, the one frame of the second type data corresponding to the two adjacent frames of the first type data is one frame of the second type data that is obtained at a moment whose sum of distances from respective moments for obtaining the two adjacent frames of the first type data is minimum.

Assume that the two adjacent frames of the first type data are one frame of data obtained at moment ti and one frame of data obtained at moment $t_{i+1}$, and the second type data corresponding to the two adjacent frames of the first type data is one frame of point-cloud data obtained at moment t', then moment t' is a moment whose sum of distances from moment t' to moment ti and from moment ti to moment ti+i is minimum. Specifically, t' may be determined by the following formula (1).

$$t' = \min_{t_p} \left( \left| t_p - t_i \right| + \left| t_p - t_{i+1} \right| \right) \qquad (1)$$

Where $t_p$ is any moment for obtaining the second type data.

In addition, for example, the transformation matrix here may be a rotation matrix and a translation matrix. Assume that the first data and the second data are two frames of the first type data obtained at adjacent moments, respectively. Rotation and translation is performed on the first data at a predetermined angle and a predetermined distance indicated by the rotation matrix and the translation matrix, so that the transformed first data can be spliced together with the second data to implement incremental construction of a map. Furthermore, the rotation matrix and the translation matrix also represent the change of a robot from a previous position-pose (namely, a position and a pose) to a current position-pose.

Next, specific processes of calculating the transformation matrix between the data of the same type and the transformation matrix between the data of different types will be described, respectively.

First, the step of determining the transformation matrix between the two adjacent frames of the first type data includes the following steps. Matching between the first data and the second data is performing using a first matching method. First flag information indicating that the matching is successful is generated, and the first transformation matrix from the first data to the second data is determined, when the first data matches the second data. The first transformation matrix from a first image obtained at moment ti to a second image obtained at moment ti+i may be expressed by $[R|T]t_i, t_{i+1}$. Second flag information indicating that the matching is unsuccessful is generated, and the first transformation matrix from the first data to the second data is not determined, when the first data does not match the second data.

For example, in a case where the first type data is image data, matching between two adjacent frames of the image data may be performed as follows. First, feature points of the two frames of the image data are extracted, respectively. For example, the feature points may be corner points, edges or the like in the image. Then, feature descriptors for describing the features of the feature points are selected. The feature descriptor is usually a vector that describes information of pixels around the feature point according to a predetermined design method. As long as the feature descriptors of two feature points are close in a vector space, the two feature points may be considered as the same feature point. Then, the feature descriptor corresponding to each feature point is calculated, and matching of the feature points between the two images is performed based on the similarity of the feature descriptors (namely, the distance in the vector space).

If the number of matched feature point pairs is sufficient (for example, greater than a certain threshold), the transformation matrix between the two images is calculated based on the matched feature point pairs. For example, the transformation matrix may be calculated using BA (Bundle Adjustment) or PNP (Perspective-n-Point) methods. On the other hand, if the number of matched feature point pairs is too few (for example, less than a specific threshold), the transformation matrix between the two images cannot be calculated based on the matched feature point pairs. In this case, as described below, point-cloud data serving as the second type data is used to assist in determining the transformation matrix, thereby effectively avoiding the problem that the transformation matrix cannot be determined.

In addition, in a case where the first type data is point-cloud data, matching between two frames of point-cloud data may also be performed similarly.

Secondly, the step of determining the transformation matrices between the second type data and the two adjacent frames of the first type data includes the following steps. Matching between the first data and third data is performed using a second matching method, and the second transformation matrix from the first data to the third data is determined. The second transformation matrix from a first image obtained at moment ti to a third image obtained at moment t' may be expressed by $[R|T]t_i, t'$. Matching between the third data and second data is performed using the second matching method, and the third transformation matrix from the third data to the second data is determined. The third transformation matrix from the third image obtained at moment t' to a second image obtained at moment $t_{i+1}$ may be expressed by $[R|T]t', t_{i+1}$. Here, the third data is the one frame of the second type data corresponding to the two adjacent frames of the first type data.

Note that unlike the data matching between the same types, since the first data and the third data belong to different types of data, the matching between those two may use the second matching method, which is different from the first matching method.

For example, in a case where the first type data is image data and the second type data is point-cloud data, as described above, since a pixel point in the image data represents the grayscale value of the point (black and white image) or R, G and B values (color image), and a pixel point in the point-cloud data represents a three-dimensional coordinate value of the point, it is difficult to directly extract feature points and feature descriptors for comparison. In this case, the matching may be performed as follows. First, features such as edges or corner points are extracted from the image data using methods such as SOBEL operator or FAST operator. Then, features such as edges or corner points are extracted from the point-cloud data using methods such as distance differences between adjacent points. Finally, a transformation matrix between the image data and the point-cloud data is calculated based on the minimized edge or the projection errors of corner points.

Finally, in step S103, the determined transformation matrices are fused based on a predetermined fusion strategy, and the fused transformation matrix is determined as a final transformation matrix between the two adjacent frames of the first type data.

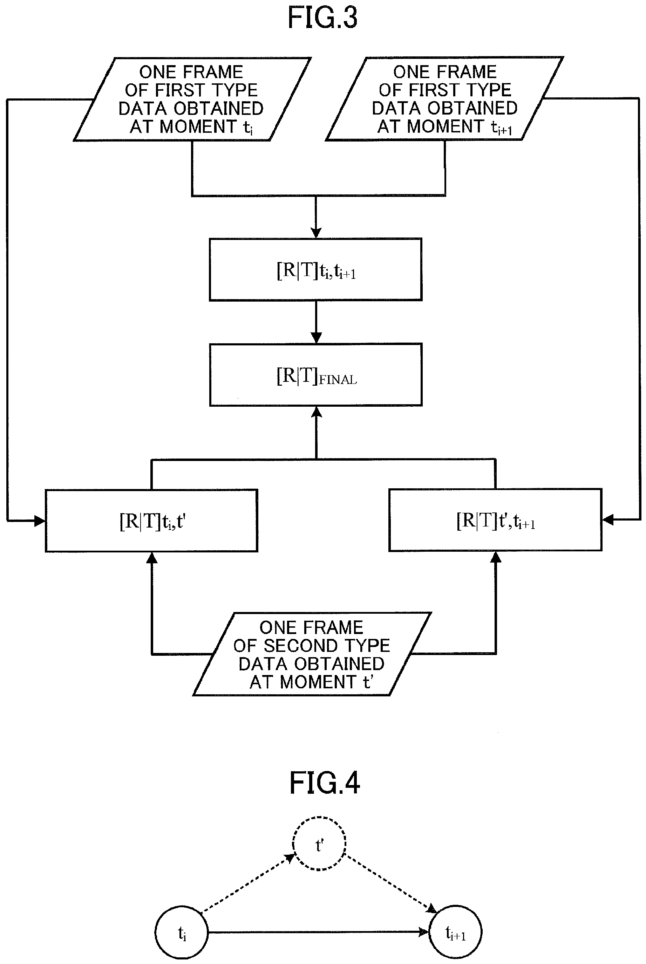

FIG. 3 is a schematic diagram illustrating a data flow of the transformation matrix determining method according to the embodiment of the present disclosure. As shown in FIG. 3, a transformation matrix $[R|T]t_i, t_{i+1}$ between data of the same type is determined, based on two frames of data of the same type obtained at adjacent moments. Furthermore, transformation matrices $[R|T]t_i, t'$ and $[R|T]t', t_{i+1}$ between the first type data and the second type data are determined, based on the same type of data (the first type data), combined with different types of data (the second type data) obtained at moment t' corresponding to moments ti and $t_{i+1}$. Finally, the obtained transformation matrices $[R|T]t_i, t_{i+1}$, $[R|T]t_i, t'$ and $[R|T]t', t_{i+1}$ are fused to obtain final transformation matrix $[R|T]_{FINAL}$, based on the predetermined fusion strategy.

The basic principle of the predetermined fusion strategy is as follows. In a case where the transformation matrix can be obtained between the same type of data, the transformation matrices obtained between different types of data may be used as adjustment parameters for further optimizing the transformation matrix between the same type of the data. In a case where the transformation matrices cannot be obtained between the same type of data, transformation matrices obtained between different types of data may be used as a substitute, to avoid situations that subsequent mapping and positioning processes cannot be performed when no transformation matrix can be determined. Note that, in the transformation matrix determination method according to the present disclosure, it is unnecessary to perform time alignment on the obtaining moment of the second type data for optimizing and supplementing the transformation matrix between the first type data, and the obtaining moment of the first type data.

FIG. 4 is a schematic diagram illustrating a fusion strategy based on a local closed-loop according to the embodiment of the present disclosure. As shown in FIG. 4, moment t' corresponding to moments ti and $t_{i+1}$ is selected as an intermediate bridge, to optimize and supplement the transformation matrix from moment ti to moment ti+i as described above.

Specifically, in a case where the first flag information is generated, namely, matching between the same type of data is successful, the predetermined fusion strategy is as follows. The transformation matrix between the two adjacent frames of the first type data is adjusted based on the transformation matrices between the one frame of the second type data corresponding to the two adjacent frames of the first type data and the two adjacent frames of the first type data, and the adjusted transformation matrix is determined as the final transformation matrix between the two adjacent frames of the first type data.

For example, as a possible implementation manner, the process of adjusting the transformation matrix between the two adjacent frames of the first type data, based on the transformation matrices between the one frame of the second type data corresponding to the two adjacent frames of the first type data and the two adjacent frames of the first type data may include the following steps. A product of the second transformation matrix and the third transformation matrix is calculated to obtain a fourth transformation matrix. Then, weighting coefficients of the first transformation matrix and the fourth transformation matrix are determined. Then, a weighted sum of the first transformation matrix and the fourth transformation matrix is calculated, and the weighted sum is determined as the adjusted transformation matrix.

Specifically, the final transformation matrix may be obtained by the following formula (2).

$$[R|T]_{FINAL} = a \cdot [R|T]_{t_i,t_{i+1}} + b \cdot \{[R|T]_{t_i,t'} \cdot [R|T]_{t',t_{i+1}}\}$$

$$(2)$$

Where $[R|T]t_i,t_{i+1}$ represents the transformation matrix from the first image obtained at moment ti to the second image obtained at moment $t_{i+1}$, $[R|T]t_i,t'$ represents the transformation matrix from the first image obtained at moment ti to the third image obtained at moment t', and $[R|T]t',t_{i+1}$ represents the transformation matrix from the third image obtained at moment t' to the second image obtained at moment ti+i. Here, a and b are decimals between 0 and 1, respectively, and a+b=1.

In actual operation, the values of weights a and b may be set based on the confidence of the data. For example, if it is considered that the confidence of the transformation matrix between the same type of data is high, weight a is set to a larger value. If it is considered that the confidence of the transformation matrix between different types of data is high, weight b is set to a larger value.

On the other hand, in a case where the second flag information is generated, namely, matching between the same type of data is unsuccessful, the predetermined fusion strategy is as follows. The final transformation matrix between the two adjacent frames of the first type data is determined, based on the transformation matrices between the one frame of the second type data corresponding to the two adjacent frames of the first type data and the two adjacent frames of the first type data.

For example, as a possible implementation manner, the process of determining the final transformation matrix between the two adjacent frames of the first type data, based on the transformation matrices between the one frame of the second type data corresponding to the two adjacent frames of the first type data and the two adjacent frames of the first type data may include the following steps. A product of the second transformation matrix and the third transformation matrix is calculated as the final transformation matrix between the two adjacent frames of the first type data.

Specifically, the final transformation matrix may be obtained by the following formula (3).

$$[R|T]_{FINAL} = [R|T]_{t_i,t'} \cdot [R|T]_{t',t_{i+1}} \qquad (3)$$

In the transformation matrix determining method according to the embodiment of the present disclosure, the transformation matrix calculated based on the same type of data and the transformation matrix calculated based on different types of data are fused, thereby effectively avoiding a problem that a transformation matrix cannot be determined by a single type of data due to the limitations of the use scene. For example, in vision-based SLAM, situations such as sharp turns, high-speed movements, and lighting transitions will cause sudden changes between two adjacent frames of image data (namely, the same features between two adjacent frames of images will sharply decrease), and accordingly the calculation of the transformation matrix between two adjacent frames of image data fails. In these cases, in the transformation matrix determining method according to the embodiment of the present disclosure, the calculation of the transformation matrix can be assisted by fusing different types of point-cloud data.

Furthermore, in the process of calculating the transformation matrix based on the different types of data, it is not necessary to align the moments on the different types of data collected by different devices. Instead, it is only necessary to find the moment of obtaining the second type data whose sum of distances from respective moments of obtaining the first type data is minimum, thereby simplifying the data collection process and avoiding complex synchronization between the devices.

Hereinabove, the case of directly calculating the transformation matrix using the obtained different types of data is described. However, for example, if there is a dynamic target (such as a moving vehicle) in a current scene, the position of the dynamic target in the scene changes with the passage of time due to its own motion. In this case, if the matching is performed based on the same dynamic target existing in two adjacent frames of data, compared to the transformation matrix determined based on the same static target existing in the two adjacent frames of data, the same dynamic target existing in the two frames of data is different and inaccurate, and the transformation matrix cannot even be obtained.

Thus, alternatively, in order to improve the accuracy and stability of positioning and mapping, in another possible implementation manner, the transformation matrix determining method may further include step S101' (shown by a dashed box in FIG. 1), before the step of determining the transformation matrix between the two adjacent frames of the first type data, and the transformation matrices between the one frame of the second type data corresponding to the two adjacent frames of the first type data and the two adjacent frames of the first type data, namely between step S101 and step S102 in FIG. 1. In step S101', at least one dynamic target is removed from at least one of the two adjacent frames of the first type data and the one frame of the second type data corresponding to the two adjacent frames of the first type data.

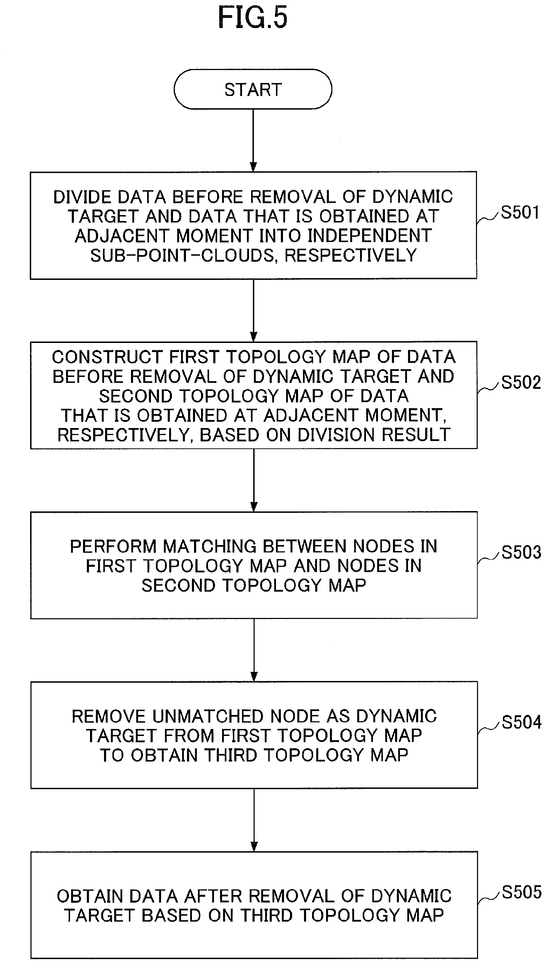

FIG. 5 is a flowchart illustrating a specific process of removing dynamic targets in a case where data from which the dynamic target is to be removed is point-cloud data. As shown in FIG. 5, the step of removing the dynamic target from at least one of the two adjacent frames of the first type data and the one frame of the second type data corresponding to the two adjacent frames of the first type data further includes the following steps.

First, in step S501, the data from which the dynamic target is to be removed and data that is obtained at an adjacent moment are divided into a plurality of independent sub-point-clouds, respectively. Here, each of the sub-point-clouds represents an independent object in an environment.

For example, in a case where the first type data is image data and the second type data is point-cloud data, the data from which the dynamic target is to be removed is the third data described above, and the data obtained at the adjacent moment is data that is obtained at a moment adjacent to the moment for obtaining the third data (a previous moment or a next moment) and is the same type as the third data.

In a case where the first type data is point-cloud data and the second type data is image data, the data from which the dynamic target is to be removed is the first data and the second data described above. In a case where the data from which the dynamic target is to be removed is the first data, the second data may be used as the data obtained at the adjacent moment. In a case where the data from which the dynamic target is to be removed is the second data, the first data may be used as the data obtained at the adjacent moment.

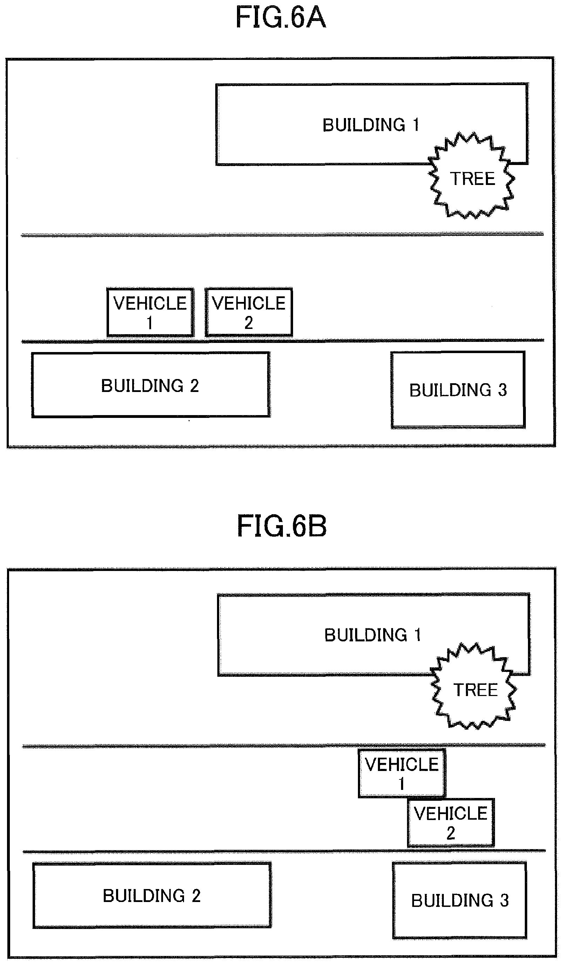

FIGs. 6A and 6B are schematic diagrams illustrating respective sub-point-clouds obtained after dividing the data from which the dynamic target is to be removed and data that is obtained at an adjacent moment, respectively. It can be seen that the relative positions of the sub-point-clouds of building 1, building 2, building 3, and tree serving as static targets do not change between two adjacent frames of data, while the relative positions of the sub-point-clouds of vehicle 1 and vehicle 2 serving as the dynamic targets change between the two adjacent frames of data.

Then, in step S502, a first topology map of the data from which the dynamic target is to be removed and a second topology map of the data that is obtained at an adjacent moment are constructed, respectively, based on a division result. Here, each node in the first topology map and the second topology map represents a point set of an object in the environment.

Next, in step S503, matching is performed between the nodes in the first topology map and the nodes in the second topology map.

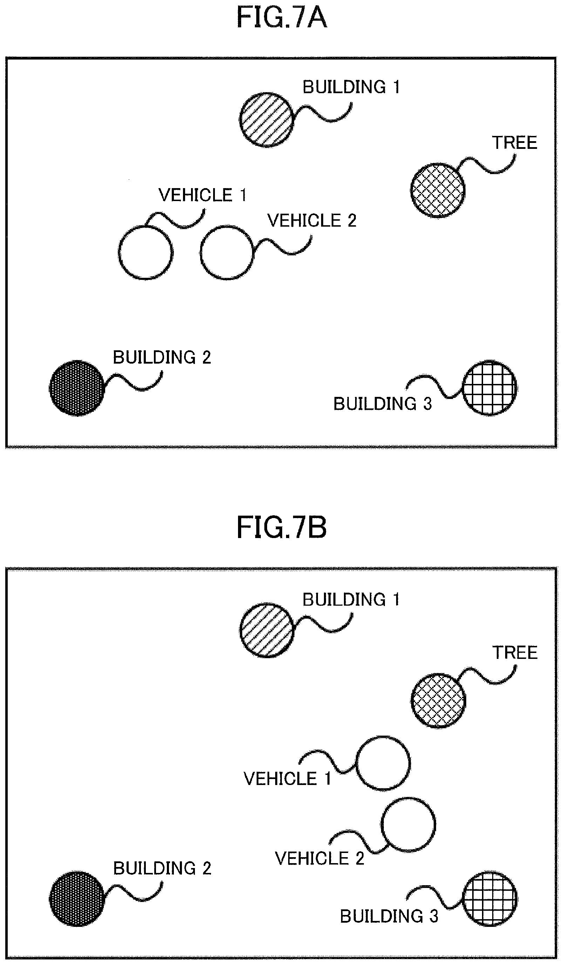

FIGs. 7A and 7B are schematic diagrams illustrating a first topology map and a second topology map obtained based on respective division results of the point-clouds of FIGs. 6A and 6B, respectively. The circles in FIGs. 7A and 7B represent nodes in the topology maps. Here, the circles filled with the same pattern represent nodes that have been successfully matched. It can be seen that the matching of vehicles 1 and 2 is not successful in the first topology map and the second topology map, because the relative positions of the vehicles 1 and 2 serving as the dynamic targets change.

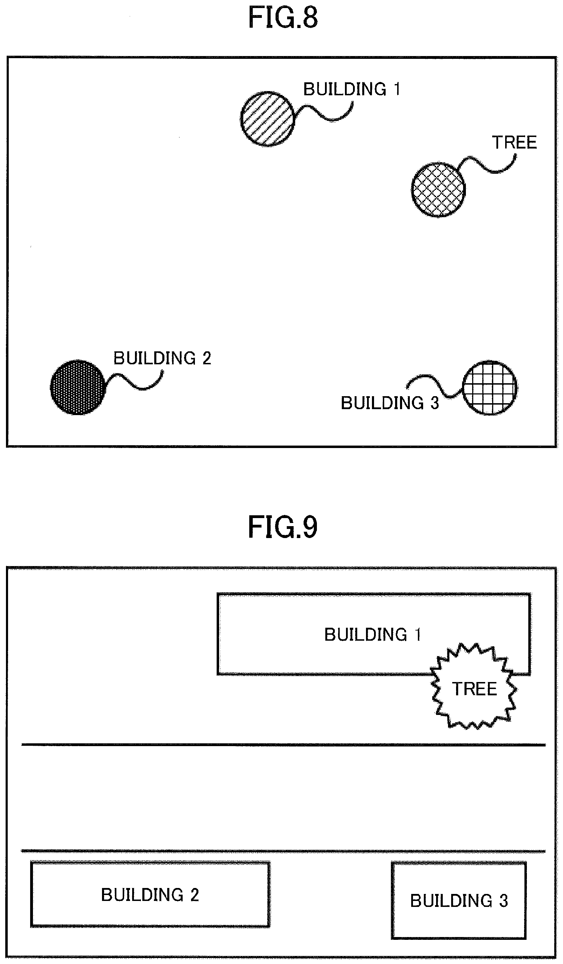

Then, in step S504, the unmatched nodes are removed as the dynamic targets from the first topology map to obtain a third topology map, as shown in FIG. 8.

Finally, in step S505, data after the removal of the dynamic target is obtained based on the third topology map, as shown in FIG. 9.

The matching between feature points of the dynamic target may cause an error in calculating the transformation matrix. Accordingly, in this embodiment, the point-cloud of the dynamic target is removed based on the topology map to obtain stable points in the environment, thereby improving accuracy and stability of the calculated transformation matrix.

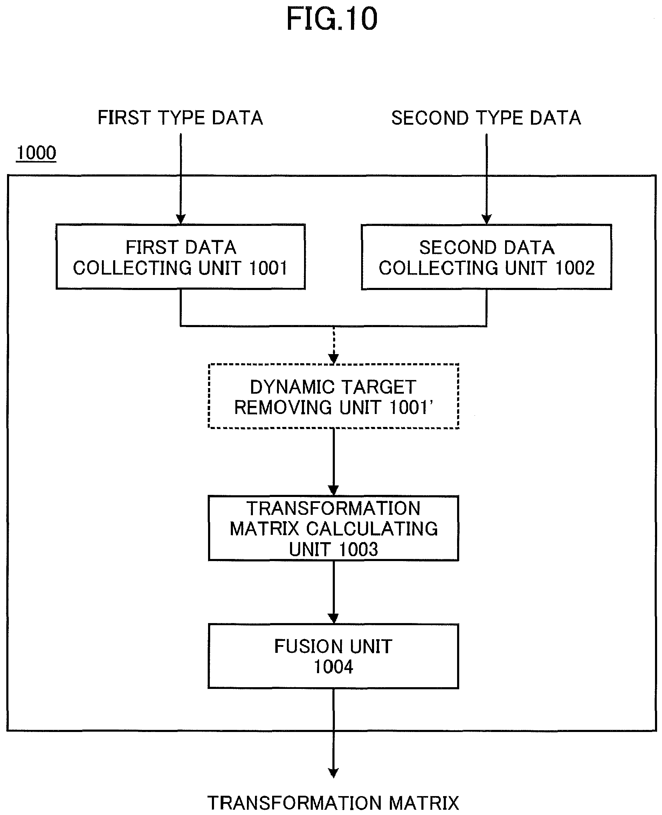

Hereinabove, the transformation matrix determining method according to the embodiment of the present disclosure has been described in detail with reference to FIGs. 1 to 9. In the following, a transformation matrix determining apparatus according to another embodiment of the present disclosure will be described with reference to FIG. 10.

FIG. 10 is a block diagram illustrating a functional configuration of a transformation matrix determining apparatus according to another embodiment of the present disclosure. As shown in FIG. 10, the transformation matrix determining apparatus 1000 includes a first data collecting unit 1001, a second data collecting unit 1002, a transformation matrix calculating unit 1003, and a fusion unit 1004.

The first data collecting unit 1001 continuously obtains a plurality of frames of first type data at a first frequency. For example, the first data collecting unit 1001 may be a camera. In this case, the first type data is image data.

The second data collecting unit 1002 continuously obtains a plurality of frames of second type data at a second frequency. For example, the second data collecting unit 1002 may be a lidar. In this case, the second type data is point-cloud data.

Note that the present disclosure is not limited to this. Any other type of data collecting unit may be similarly applied to the present disclosure, as long as the types of the first data collecting unit 1001 and the second data collecting unit 1002 are different.

Due to the differences in operating parameters of different devices, the frequency for obtaining the data is usually different. A time interval between adjacent moments for obtaining the first type data by the first data collecting unit 1001 is a first interval corresponding to the first frequency, and a time interval between adjacent moments for obtaining the second type data by the second data collecting unit 1002 is a second interval corresponding to the second frequency. The first interval and second interval are usually different intervals. Accordingly, the moment for obtaining the first type data by the first data collecting unit 1001 and the moment for obtaining the second type data by the second data collecting unit 1002 are usually misaligned.

The transformation matrix calculating unit 1003 determines a transformation matrix between two adjacent frames of the first type data, and transformation matrices between one frame of the second type data corresponding to the two adjacent frames of the first type data and the two adjacent frames of the first type data. Here, the one frame of the second type data corresponding to the two adjacent frames of the first type data is one frame of the second type data that is obtained at a moment whose sum of distances from respective moments for obtaining the two adjacent frames of the first type data is minimum.

The transformation matrix calculating unit 1003 may further include a first calculating unit (not shown) for calculating a transformation matrix between the same type of data (namely, the two adjacent frames of the first type data). Specifically, the first calculating unit performs matching between first data and second data using a first matching method. Then, the first calculating unit generates first flag information indicating that the matching is successful, and determines a first transformation matrix from the first data to the second data, when the first data matches the second data. Then, the first calculating unit generates second flag information indicating that the matching is unsuccessful, and does not determine the first transformation matrix from the first data to the second data, when the first data does not match the second data. Here, the first data and the second data are two frames of the first type data obtained at adjacent moments, respectively.

Furthermore, the transformation matrix calculating unit 1003 may further include a second calculating unit (not shown) for calculating a transformation matrix between different types of data (namely, the second type data and the two adjacent frames of the first type data). Specifically, the second calculating unit performs matching between the first data and third data using a second matching method, and determines a second transformation matrix from the first data to the third data. Then, the second calculating unit performs matching between the third data and second data using the second matching method, and determines a third transformation matrix from the third data to the second data. Here, the third data is the one frame of the second type data corresponding to the two adjacent frames of the first type data.

The fusion unit 1004 fuses the determined transformation matrices based on a predetermined fusion strategy, and determines the fused transformation matrix as a final transformation matrix between the two adjacent frames of the first type data.

When the first flag information is generated, the fusion unit 1004 selects the following fusion strategy. The transformation matrix between the two adjacent frames of the first type data is adjusted based on the transformation matrices between the one frame of the second type data corresponding to the two adjacent frames of the first type data and the two adjacent frames of the first type data, and the adjusted transformation matrix is determined as the final transformation matrix between the two adjacent frames of the first type data.

For example, as a possible implementation manner, when the first flag information is generated, the fusion unit 1004 calculates a product of the second transformation matrix and the third transformation matrix to obtain a fourth transformation matrix. Then, the fusion unit 1004 determines weighting coefficients of the first transformation matrix and the fourth transformation matrix. Then, the fusion unit 1004 calculates a weighted sum of the first transformation matrix and the fourth transformation matrix, and determines the weighted sum as the adjusted transformation matrix.

On the other hand, when the second flag information is generated, the fusion unit 1004 selects the following fusion strategy. The final transformation matrix between the two adjacent frames of the first type data is determined based on the transformation matrices between the one frame of the second type data corresponding to the two adjacent frames of the first type data and the two adjacent frames of the first type data.

For example, as a possible implementation manner, when the second flag information is generated, the fusion unit 1004 calculates a product of the second transformation matrix and the third transformation matrix as the final transformation matrix between the two adjacent frames of the first type data.

In the transformation matrix determining apparatus according to the embodiment of the present disclosure, the transformation matrix calculated based on the same type of data and the transformation matrix calculated based on different types of data are fused, thereby effectively avoiding a problem that a transformation matrix cannot be determined by a single type of data due to the limitations of the use scene. For example, in vision-based SLAM, situations such as sharp turns, high-speed movements, and lighting transitions will cause sudden changes between two adjacent frames of image data (namely, the same features between two adjacent frames of images will sharply decrease), and accordingly the calculation of the transformation matrix between two adjacent frames of image data fails. In these cases, in the transformation matrix determining method according to the embodiment of the present disclosure, the calculation of the transformation matrix can be assisted by fusing different types of point-cloud data.

Furthermore, in the process of calculating the transformation matrix based on the different types of data, it is not necessary to align the moments on the different types of data collected by different devices. Instead, it is only necessary to find the moment of obtaining the second type data whose sum of distances from respective moments of obtaining the first type data is minimum, thereby simplifying the data collection process and avoiding complex synchronization between the devices.

Hereinabove, the case of directly calculating the transformation matrix using the obtained different types of data is described. However, for example, if there is a dynamic target (such as a moving vehicle) in a current scene, the position of the dynamic target in the scene changes with the passage of time due to its own motion. In this case, if the matching is performed based on the same dynamic target existing in two adjacent frames of data, compared to the transformation matrix determined based on the same static target existing in the two adjacent frames of data, the same dynamic target existing in the two frames of data is different and inaccurate, and the transformation matrix cannot even be obtained.

Thus, alternatively, in order to improve the accuracy and stability of positioning and mapping, in another possible implementation manner, the transformation matrix determining apparatus may further include a dynamic target removing unit 1001' (shown by a dashed box in FIG. 10). The dynamic target removing unit 1001' removes at least one dynamic target from at least one of the two adjacent frames of the first type data and the one frame of the second type data corresponding to the two adjacent frames of the first type data.

For example, data from which the dynamic target is to be removed is point-cloud data. The dynamic target removing unit 1001' divides the data from which the dynamic target is to be removed and data that is obtained at an adjacent moment into a plurality of independent sub-point-clouds, respectively. Here, each of the sub-point-clouds represents an independent object in an environment. Then, the dynamic target removing unit 1001' constructs a first topology map of the data from which the dynamic target is to be removed and a second topology map of the data that is obtained at an adjacent moment, respectively, based on a division result. Here, each node in the first topology map and the second topology map represents a point set of an object in the environment. Then, the dynamic target removing unit 1001' performs matching between the nodes in the first topology map and the nodes in the second topology map. Then, the dynamic target removing unit 1001' removes the unmatched node as the dynamic target from the first topology map to obtain a third topology map. Then, the dynamic target removing unit 1001' obtains data after the removal of the dynamic target based on the third topology map.

The matching between feature points of the dynamic target may cause an error in calculating the transformation matrix. Accordingly, in this embodiment, the dynamic target removing unit 1001' removes the point-cloud of the dynamic target based on the topology map to obtain stable points in the environment, thereby improving accuracy and stability of the calculated transformation matrix.

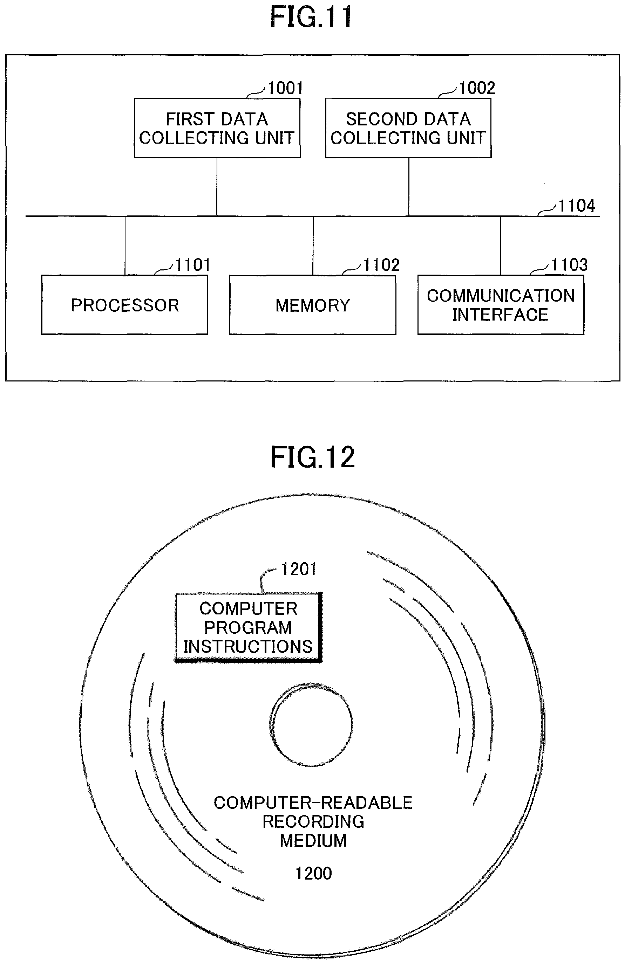

FIG. 11 is a block diagram illustrating a hardware configuration of a transformation matrix determining apparatus according to another embodiment of the present disclosure. The transformation matrix determining apparatus includes a first data collecting unit 1001, a second data collecting unit 1002, a processor 1101, a memory 1102, and at least one external communication interface 1103. The first data collecting unit 1001, the second data collecting unit 1002, the processor 1101, the memory 1102, and the at least one external communication interface 1103 are all connected through a bus 1104.

As the processor 1101 used for data processing, a microprocessor, a central processing unit (CPU), a digital signal processor (DSP), or a field-programmable gate array (FPGA) may be used when performing processing. The memory 1102 includes operation instructions, which may be computer-executable codes. The operation instructions are used to implement the steps of the transformation matrix determining method according to the embodiment of the present disclosure.

FIG. 12 is a schematic diagram illustrating a non-transitory computer-readable recording medium according to another embodiment of the present disclosure. As shown in FIG. 12, a computer-readable recording medium 1200 according to an embodiment of the present disclosure has computer program instructions 1201 stored therein. When the computer program instructions 1201 are executed by a processor, a transformation matrix determining method according to the embodiment of the present disclosure described with reference to the above drawings is executed.

Since the operations of the respective units in the transformation matrix determining apparatus according to the embodiment of the present disclosure completely correspond to the respective steps in the transformation matrix determining method described above, in order to avoid redundancy, details thereof are not described here.

Hereinabove, the method and the apparatus for determining the transformation matrix, and the non-transitory computer-readable recording medium according to the embodiments of the present disclosure are described in detail with reference to FIGs. 1 to 12. In the method and the apparatus for determining the transformation matrix, and the non-transitory computer-readable recording medium according to the embodiments of the present disclosure, the transformation matrix calculated based on the same type of data and the transformation matrix calculated based on different types of data are fused, thereby effectively avoiding a problem that a transformation matrix cannot be determined by a single type of data due to the limitations of the use scene. For example, in vision-based SLAM, situations such as sharp turns, high-speed movements, and lighting transitions will cause sudden changes between two adjacent frames of image data (namely, the same features between two adjacent frames of images will sharply decrease), and accordingly the calculation of the transformation matrix between two adjacent frames of image data fails. In these cases, in the transformation matrix determining method according to the embodiment of the present disclosure, the calculation of the transformation matrix can be assisted by fusing different types of point-cloud data. Furthermore, in the process of calculating the transformation matrix based on the different types of data, it is not necessary to align the moments on the different types of data collected by different devices, thereby simplifying the data collection process and avoiding complex synchronization between the devices. Additionally, the matching between feature points of the dynamic target may cause an error in calculating the transformation matrix. Accordingly, in the embodiments of the present disclosure, the point-cloud of the dynamic target is removed based on the topology map to obtain stable points in the environment, thereby improving accuracy and stability of the calculated transformation matrix.

The units, apparatuses, devices, steps, methods and system are just examples, the connection, placement and configuration illustrated in the block diagrams related to the present disclosure are not limited to these examples, and the units, apparatuses, devices, steps, methods and system may be connected, placed or configured in any way. The terms "comprise", "include" and "have" are open-form terms, which mean and may be changed into "include and is not limited to". The terms "or" and "and" mean and may be changed into "and/or", unless the context is clearly not applicable. The term "such as" means and may be changed to "such as, but not limited to".

Steps of the above method may be performed in the time order; however, the performing sequence is not limited to the time order. Any steps may be performed in parallel or independently.

The above embodiments may be realized by hardware, software, firmware or any combination thereof. When the embodiment is implemented by software, a computer software product according to the embodiment may be stored in a computer-readable medium as one or more commands. The recording medium may be any real medium that can be accessed by a computer (such as a personal computer, a server, a network device or the like). Such a computer-readable medium includes a RAM, a ROM, an EEPROM, a CD-ROM or other laser discs, a magnetic disk or other magnetic memory, or any other real media that carry or store commands, data or program codes and are accessed by the computer.

The present disclosure is not limited to the specifically disclosed embodiments, and various modifications, combinations and replacements may be made without departing from the scope of the present disclosure.

The present application claims priority under 35 U.S.C. §119 to Chinese Application No. 201910248609.3 filed on March 29, 2019, the entire contents of which are incorporated herein by reference.


**Claims**

**1.** A method for determining a transformation matrix, the method comprising:

continuously obtaining a plurality of frames of first type data at a first frequency and continuously obtaining a plurality of frames of second type data at a second frequency, a time interval between adjacent moments for obtaining the first type data being a first interval corresponding to the first frequency, and a time interval between adjacent moments for obtaining the second type data being a second interval corresponding to the second frequency;

determining a transformation matrix between two adjacent frames of the first type data, and transformation matrices between one frame of the second type data corresponding to the two adjacent frames of the first type data and the two adjacent frames of the first type data, the one frame of the second type data corresponding to the two adjacent frames of the first type data being one frame of the second type data that is obtained at a moment whose sum of distances from respective moments for obtaining the two adjacent frames of the first type data is minimum; and

fusing, based on a predetermined fusion strategy, the determined transformation matrices, and determining the fused transformation matrix as a final transformation matrix between the two adjacent frames of the first type data.

2. The method for determining the transformation matrix as claimed in claim 1,
wherein determining the transformation matrix between the two adjacent frames of the first type data includes performing, using a first matching method, matching between first data and second data;
generating first flag information indicating that the matching is successful, and determining a first transformation matrix from the first data to the second data, when the first data matches the second data; and
generating second flag information indicating that the matching is unsuccessful, and not determining the first transformation matrix from the first data to the second data, when the first data does not match the second data, and wherein the first data and the second data are two frames of the first type data obtained at adjacent moments, respectively.

3. The method for determining the transformation matrix as claimed in claim 2,
wherein the predetermined fusion strategy is a strategy in which the transformation matrix between the two adjacent frames of the first type data is adjusted based on the transformation matrices between the one frame of the second type data corresponding to the two adjacent frames of the first type data and the two adjacent frames of the first type data, and the adjusted transformation matrix is determined as the final transformation matrix between the two adjacent frames of the first type data, when the first flag information is generated, and
wherein the predetermined fusion strategy is a strategy in which the final transformation matrix between the two adjacent frames of the first type data is determined based on the transformation matrices between the one frame of the second type data corresponding to the two adjacent frames of the first type data and the two adjacent frames of the first type data, when the second flag information is generated.

4. The method for determining the transformation matrix as claimed in claim 3,
wherein determining the transformation matrices between the second type data and the two adjacent frames of the first type data includes
performing, using a second matching method, matching between the first data and third data, and determining a second transformation matrix from the first data to the third data; and
performing, using the second matching method, matching between the third data and second data, and determining a third transformation matrix from the third data to the second data, and
wherein the third data is the one frame of the second type data corresponding to the two adjacent frames of the first type data.

5. The method for determining the transformation matrix as claimed in claim 4,
wherein adjusting, based on the transformation matrices between the one frame of the second type data corresponding to the two adjacent frames of the first type data and the two adjacent frames of the first type data, the transformation matrix between the two adjacent frames of the first type data includes
calculating a product of the second transformation matrix and the third transformation matrix to obtain a fourth transformation matrix;
determining weighting coefficients of the first transformation matrix and the fourth transformation matrix; and
calculating a weighted sum of the first transformation matrix and the fourth transformation matrix, and determining the weighted sum as the adjusted transformation matrix.

6. The method for determining the transformation matrix as claimed in claim 1, the method further comprising:
removing at least one dynamic target from at least one of the two adjacent frames of the first type data and the one frame of the second type data corresponding to the two adjacent frames of the first type data, before determining the transformation matrix between the two adjacent frames of the first type data, and before determining the transformation matrices between the one frame of the second type data corresponding to the two adjacent frames of the first type data and the two adjacent frames of the first type data.

**7.** The method for determining the transformation matrix as claimed in claim 6,
wherein data from which the dynamic target is to be removed is point-cloud data, and
wherein removing the dynamic target from at least one of the two adjacent frames of the first type data and the one frame of the second type data corresponding to the two adjacent frames of the first type data includes

dividing the data from which the dynamic target is to be removed and data that is obtained at an adjacent moment into a plurality of independent sub-point-clouds, respectively, each of the sub-point-clouds representing an independent object in an environment;
constructing, based on a division result, a first topology map of the data from which the dynamic target is to be removed and a second topology map of the data that is obtained at an adjacent moment, respectively, each node in the first topology map and the second topology map representing a point set of an object in the environment;
performing matching between the nodes in the first topology map and the nodes in the second topology map;
removing the unmatched node as the dynamic target from the first topology map to obtain a third topology map; and
obtaining, based on the third topology map, data after the removal of the dynamic target.

**8.** An apparatus for determining a transformation matrix, the apparatus comprising:

a first data collecting unit configured to continuously obtain a plurality of frames of first type data at a first frequency;
a second data collecting unit configured to continuously obtain a plurality of frames of second type data at a second frequency;
a transformation matrix calculating unit configured to determine a transformation matrix between two adjacent frames of the first type data, and transformation matrices between one frame of the second type data corresponding to the two adjacent frames of the first type data and the two adjacent frames of the first type data, the one frame of the second type data corresponding to the two adjacent frames of the first type data being one frame of the second type data that is obtained at a moment whose sum of distances from respective moments for obtaining the two adjacent frames of the first type data is minimum; and
a fusion unit configured to fuse, based on a predetermined fusion strategy, the determined transformation matrices, and determine the fused transformation matrix as a final transformation matrix between the two adjacent frames of the first type data,
wherein a time interval between adjacent moments for obtaining the first type data by the first data collecting unit is a first interval corresponding to the first frequency, and a time interval between adjacent moments for obtaining the second type data by the second data collecting unit is a second interval corresponding to the second frequency.

**9.** The apparatus for determining the transformation matrix as claimed in claim 8,
wherein the transformation matrix calculating unit includes a first calculating unit,
wherein the first calculating unit
performs, using a first matching method, matching between first data and second data;
generates first flag information indicating that the matching is successful, and determines a first transformation matrix from the first data to the second data, when the first data matches the second data; and
generates second flag information indicating that the matching is unsuccessful, and does not determine the first transformation matrix from the first data to the second data, when the first data does not match the second data, and
wherein the first data and the second data are two frames of the first type data obtained at adjacent moments, respectively.

**10.** The apparatus for determining the transformation matrix as claimed in claim 9,
wherein the predetermined fusion strategy is a strategy in which the transformation matrix between the two adjacent frames of the first type data is adjusted based on the transformation matrices between the one frame of the second type data corresponding to the two adjacent frames of the first type data and the two adjacent frames of the first type data, and the adjusted transformation matrix is determined as the final transformation matrix between the two adjacent frames of the first type data, when the first flag information is generated, and
wherein the predetermined fusion strategy is a strategy in which the final transformation matrix between the two adjacent frames of the first type data is determined based on the transformation matrices between the one frame of the second type data corresponding to the two adjacent frames of the first type data and the two adjacent frames of the first type data, when the second flag information is generated.

**11.** The apparatus for determining the transformation matrix as claimed in claim 10,
wherein the transformation matrix calculating unit includes a second calculating unit,

wherein the second calculating unit

performs, using a second matching method, matching between the first data and third data, and determines a second transformation matrix from the first data to the third data; and

performs, using the second matching method, matching between the third data and second data, and determines a third transformation matrix from the third data to the second data, and

wherein the third data is the one frame of the second type data corresponding to the two adjacent frames of the first type data.

12. The apparatus for determining the transformation matrix as claimed in claim 11,

wherein when the first flag information is generated, the fusion unit

calculates a product of the second transformation matrix and the third transformation matrix to obtain a fourth transformation matrix;

determines weighting coefficients of the first transformation matrix and the fourth transformation matrix; and

calculates a weighted sum of the first transformation matrix and the fourth transformation matrix, and determines the weighted sum as the adjusted transformation matrix.

13. The apparatus for determining the transformation matrix as claimed in claim 11,

wherein when the second flag information is generated, the fusion unit

calculates a product of the second transformation matrix and the third transformation matrix as the final transformation matrix between the two adjacent frames of the first type data.

14. The apparatus for determining the transformation matrix as claimed in claim 8, the apparatus further comprising:

a dynamic target removing unit configured to remove at least one dynamic target from at least one of the two adjacent frames of the first type data and the one frame of the second type data corresponding to the two adjacent frames of the first type data.

15. The apparatus for determining the transformation matrix as claimed in claim 14,

wherein data from which the dynamic target is to be removed is point-cloud data, and

wherein the dynamic target removing unit

divides the data from which the dynamic target is to be removed and data that is obtained at an adjacent moment into a plurality of independent sub-point-clouds, respectively, each of the sub-point-clouds representing an independent object in an environment;

constructs, based on a division result, a first topology map of the data from which the dynamic target is to be removed and a second topology map of the data that is obtained at an adjacent moment, respectively, each node in the first topology map and the second topology map representing a point set of an object in the environment;

performs matching between the nodes in the first topology map and the nodes in the second topology map;

removes the unmatched node as the dynamic target from the first topology map to obtain a third topology map; and

obtains, based on the third topology map, data after the removal of the dynamic target.

# FIG.1

START

CONTINUOUSLY OBTAIN FRAMES OF FIRST TYPE DATA AT FIRST FREQUENCY AND CONTINUOUSLY OBTAIN FRAMES OF SECOND TYPE DATA AT SECOND FREQUENCY ~S101

REMOVE DYNAMIC TARGET FROM AT LEAST ONE OF TWO ADJACENT FRAMES OF FIRST TYPE DATA AND ONE FRAME OF SECOND TYPE DATA CORRESPONDING TO TWO ADJACENT FRAMES OF FIRST TYPE DATA ~S101'

DETERMINE TRANSFORMATION MATRIX BETWEEN TWO ADJACENT FRAMES OF FIRST TYPE DATA, AND TRANSFORMATION MATRICES BETWEEN ONE FRAME OF SECOND TYPE DATA CORRESPONDING TO TWO ADJACENT FRAMES OF FIRST TYPE DATA AND TWO ADJACENT FRAMES OF FIRST TYPE DATA ~S102

FUSE DETERMINED TRANSFORMATION MATRICES BASED ON PREDETERMINED FUSION STRATEGY, AND DETERMINE FUSED TRANSFORMATION MATRIX AS FINAL TRANSFORMATION MATRIX BETWEEN TWO ADJACENT FRAMES OF FIRST TYPE DATA ~S103

# FIG.2

FIRST TYPE OF DATA SEQUENCE

SECOND TYPE OF DATA SEQUENCE

EP 3 716 103 A2

# FIG.3

ONE FRAME OF FIRST TYPE DATA OBTAINED AT MOMENT $t_i$

ONE FRAME OF FIRST TYPE DATA OBTAINED AT MOMENT $t_{i+1}$

$[R|T]t_i,t_{i+1}$

$[R|T]_{FINAL}$

$[R|T]t_i,t'$

$[R|T]t',t_{i+1}$

ONE FRAME OF SECOND TYPE DATA OBTAINED AT MOMENT $t'$

# FIG.4

# FIG.5

START

DIVIDE DATA BEFORE REMOVAL OF DYNAMIC TARGET AND DATA THAT IS OBTAINED AT ADJACENT MOMENT INTO INDEPENDENT SUB-POINT-CLOUDS, RESPECTIVELY ~S501

CONSTRUCT FIRST TOPOLOGY MAP OF DATA BEFORE REMOVAL OF DYNAMIC TARGET AND SECOND TOPOLOGY MAP OF DATA THAT IS OBTAINED AT ADJACENT MOMENT, RESPECTIVELY, BASED ON DIVISION RESULT ~S502

PERFORM MATCHING BETWEEN NODES IN FIRST TOPOLOGY MAP AND NODES IN SECOND TOPOLOGY MAP ~S503

REMOVE UNMATCHED NODE AS DYNAMIC TARGET FROM FIRST TOPOLOGY MAP TO OBTAIN THIRD TOPOLOGY MAP ~S504

OBTAIN DATA AFTER REMOVAL OF DYNAMIC TARGET BASED ON THIRD TOPOLOGY MAP ~S505

# FIG.6A

BUILDING 1

TREE

VEHICLE 1   VEHICLE 2

BUILDING 2

BUILDING 3

# FIG.6B

BUILDING 1

TREE

VEHICLE 1

VEHICLE 2

BUILDING 2

BUILDING 3

# FIG.7A

BUILDING 1

TREE

VEHICLE 1

VEHICLE 2

BUILDING 2

BUILDING 3

# FIG.7B

BUILDING 1

TREE

VEHICLE 1

VEHICLE 2

BUILDING 2

BUILDING 3

# FIG.8

# FIG.9

# FIG.10

FIRST TYPE DATA

SECOND TYPE DATA

1000

FIRST DATA
COLLECTING UNIT 1001

SECOND DATA
COLLECTING UNIT 1002

DYNAMIC TARGET
REMOVING UNIT 1001'

TRANSFORMATION
MATRIX CALCULATING
UNIT 1003

FUSION UNIT
1004

TRANSFORMATION MATRIX

# FIG.11

| | |
|---|---|
| FIRST DATA COLLECTING UNIT ⟋1001 | SECOND DATA COLLECTING UNIT ⟋1002 |

⟋1104

| PROCESSOR ⟋1101 | MEMORY ⟋1102 | COMMUNICATION INTERFACE ⟋1103 |
|---|---|---|

# FIG.12

COMPUTER PROGRAM INSTRUCTIONS ⌐1201

COMPUTER-READABLE RECORDING MEDIUM

1200

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910248609